(19) Europäisches Patentamt

European Patent Office

Office européen des brevets

(11) **EP 1 328 080 A1**

(12) **EUROPEAN PATENT APPLICATION**
published in accordance with Art. 158(3) EPC

(43) Date of publication:
**16.07.2003 Bulletin 2003/29**

(21) Application number: **01996939.3**

(22) Date of filing: **19.07.2001**

(51) Int Cl.⁷: **H04J 13/00**

(86) International application number:
**PCT/CN01/01184**

(87) International publication number:
**WO 02/041549 (23.05.2002 Gazette 2002/21)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.10.2000 CN 00131920**

(71) Applicant: **Huawei Technologies Co., Ltd.**
**Nanshan District, Shenzhen 518057 (CN)**

(72) Inventor: **CAI, Zhaohui**
**Huawei Service Centre Building**
**Guangdong Shenzhen 518057 (CN)**

(74) Representative: **Sherrard-Smith, Hugh et al**
**Appleyard Lees,**
**15 Clare Road**
**Halifax, HX1 2HY, West Yorkshire (GB)**

(54) **METHOD FOR IMPROVING CHANNEL ESTIMATION ACCURACY OF WIRELESS COMMUNICATION SYSTEM**

(57)  The invention discloses a method for improving the channel estimation accuracy of a wireless communication system with uplink synchronization or downlink synchronization. The method uses a code block with a interference free window as pilot symbols, or a code block with a interference free window to make spread spectrum for the pilot symbols. The window width of the interference free window is greater than the maximum channel transmission impulse response length, and the codes number with a interference free window is greater than the maximum subscribers number of the system. With this method, during system inherent channel estimation the interference is reduced, so the channel estimation accuracy is improved. At the same time, multiple access interference of the system is suppressed and other noise affection is reduced, so the system performance is improved too. By configuring the system pilot symbols, the system can have more subscribers.

| data1 | gap | c_code | gap | s_code | data2 |
|-------|-----|--------|-----|--------|-------|

(1)

| data1 | gap | c_code | gap | s_code | gap | data2 |
|-------|-----|--------|-----|--------|-----|-------|

(2)

| c_code | gap | data | gap | s_code |
|--------|-----|------|-----|--------|

(3)

Fig. 1

EP 1 328 080 A1

## Description

### Field of the Technology

The invention relates generally to a method for improving the channel estimation accuracy of a wireless communication system, and more particularly to a method for improving the channel estimation accuracy of a wireless communication system with uplink synchronization or downlink synchronization.

### Background of the Invention

At present, the Direct Sequence CDMA (DS CDMA) system has been used popularly. In these systems, multiple subscribers occupy a same radio frequency simultaneously, but subscribers are differentiated by different subscriber characteristic sequence, i.e., different spread spectrum code. For the third generation mobile communication system, there is one kind of CDMA systems, such as a Time-Division Synchronization CDMA (TD - SCDMA) cellular communication system, in which the time-slot structure is divided into data part and pilot part. This means that every subscriber time-slot arrives to the base station almost simultaneously. In the base station, a channel estimation is made through the pilot symbol, then the data part is processed based on the result of the channel estimation, such as RAKE receiving, multiuser detection etc.

Since the received pilot part is an overlap signal of multiple subscribers, so each subscriber pilot sequence must be different. During channel estimation, there is multiple access interference similar to the spread spectrum system; so when making a subscriber channel estimation, other subscribers affection must be considered. The CDMA system, mentioned above, generally uses a pilot structure similar to the GSM pilot. That is a cell uses a basic pilot symbol and each subscriber in the cell uses a pilot symbol generated by shifting the basic pilot symbol. This pilot structure makes a system easier to use channel unbiased estimation. The document, title "Low Cost Channel Estimation in the Uplink Receiver of CDMA Mobile Radio System" (by Bernd Steiner and Paul Walter Baier, FREQUENZ 47(1993) 11-12), proposed a channel estimation method which can simultaneously estimate all subscribers channel once. Said channel estimation method uses least square method and estimates all subscribers channel once by solving the equations. The upper limit of channel estimation performance is determined by the number of subscribers, selecting the basic pilot symbol and system noise ratio. The basic pilot symbol can use various pseudo random sequences, such as m sequence, Gold sequence or various orthogonal codes.

With the method mentioned above, since there is multiple access interference between each pilot symbol, there are receiving complexity and worse performance for system channel estimation. Besides, there are other disadvantages as follow:

1.The multiple access interference cannot be completely suppressed simultaneously or decreased to a minimum level;

2.The length of the pilot symbol and the possible delay of a real channel limit the subscribers number transited in parallel within a same time-slot of a cell; for example, in a TD - SCDMA system, suppose the channel impulse response width of a single subscriber is 8 chips, since the length of a pilot symbol is 128 chips, so the possible transited subscribers number can only be 16 for a single time-slot and single carrier.

### Summary of the Invention

The invention provides a method for improving the channel estimation accuracy of a wireless communication system with uplink synchronization and downlink synchronization. The method can improve the channel estimation accuracy of a system, and at the same time, the method can suppress or reduce the multiple access interference in the system channel estimation. Therefore, the subscribers number existing simultaneously at single time-slot and single carrier can be increased.

A method, for improving the channel estimation accuracy of a wireless communication system with uplink synchronization and downlink synchronization, at least comprises the following steps:

The pilot symbols of a system uses a code block with a interference free window, or the system uses a code block with a interference free window to make spread spectrum for the pilot symbols.

The code length of said code block with a interference free window is determined by that: the window width of the interference free window should be greater than the maximum channel transmission impulse response length, and the codes number with a interference free window should be greater than the maximum subscribers number of the system.

According to the invention technical scheme, it is further included the step: according to different number of the system subscribers, code blocks with different width of the interference free window are used.

Since the invention uses code blocks with characteristic of a interference free window as the pilot symbols, or uses code blocks with characteristic of a interference free window to make spread spectrum for the pilot symbols, so interference is reduced during system inherent channel estimation. Therefore, the channel estimation accuracy of the system is improved. At the same time, multiple access interference of the system is suppressed and other noise affection is reduced, so the system performance is improved too. By configuring the system pilot symbols, the system can have more subscribers. When using a smart antenna, subscribers in the neighborhood of an arrival angle can be configured with code sequences having wider interference free window of the cross-correlation, according to the subscriber position and the signal arrival angle configuration.

## Brief Description of the Drawings

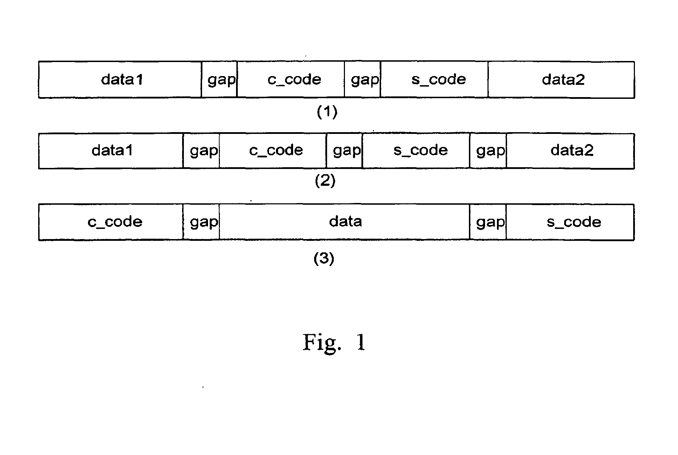

Fig. 1 shows the time-slot structure of pilot symbols using LS code.

## Embodiments of the Invention

The invention is described in more detail with reference the drawing.

The conventional spread spectrum technique uses various pseudo random sequences for spread spectrum, such as m sequence, Gold sequence or various orthogonal code, such as WALSH code, etc. The general requirements of a spread spectrum code are a good auto-correlation characteristic and with fewer and small auto-correlation side lobe; but for a multiple subscribers system, it is required that cross-correlation function value between spread spectrum codes is small. The conventional spread spectrum code can only partly satisfy this requirement. For example, the WALSH code is completely orthogonal when the code words are alignment, without alignment, the orthogonality is severely destroyed; and when the mobile channel delay is greater than one chip, the correlation characteristic is worse. When these codes are used in a mobile multipath transmission channel, a multiple subscribers system will have multiple access interference. For a multiple subscribers channel estimation, if every subscriber has a spread spectrum code with good auto-correlation characteristic and there is a good cross-correlation characteristic between spread spectrum codes, then the channel estimation accuracy will be greatly increased.

The auto-correlation function value of a spread spectrum code with a interference free window is zero everywhere except the origin, i.e.; this is an ideal characteristic. From the orthogonality point of view, every spread spectrum code is completely orthogonal with itself at any non-zero relative delay. The cross-correlation function between spread spectrum codes with a interference free window has a interference free window at the origin neighborhood. From the orthogonality point of view, spread spectrum codes are completely orthogonal when the relative delay between spread spectrum codes is less than the width of the interference free window. A spread spectrum code with a interference free window has a good auto-correlation characteristic and a better cross-correlation characteristic. When two spread spectrum codes are aligned, the cross-correlation function is zero. When two spread spectrum codes are staggered with several chips, the cross-correlation function also keep zero when the staggered chips number is less than the width of the interference free window.

The Linkair Company has proposed a LAS (Large Area Synchronization) 2000 CDMA system, in which there is a LS code, which is a spread spectrum code with a interference free window. The spread spectrum code with a interference free window is generated as follow: the spread spectrum codes are divided into two groups: one is called C code and another is called S code, C code and S code are used in pair. The C code and S code are generated as follow. First, it is necessary to have two basic C codes and two basic S codes, such as $C_0^1 = 1$, $C_1^1 = 1$, $S_0^1 = 1$, $S_1^1 = -1$. Then, LS code with other length can be generated with the following formulas:

$$LS_{M+}^i = C_{M+}^i S_{M+}^i = (C_M^i C_M^{i+} S_M^i S_M^{i+})$$

$$LS_{M+}^{i+} = C_{M+}^{i+} S_{M+}^{i+} = (C_M^i \bar{C}_{+M}^i S_M^i \bar{S}_{+M}^i)$$

$$LS_{M+}^{i+} = C_{M+}^{i+} S_{M+}^{i+} = (C_M^{i+} C_M^i S_M^{i+} S_M^i)$$

$$LS_{M+}^{i+} = C_{M+}^{i+} S_{M+}^{i+} = (C_M^{i+} \bar{C}_M^i S_M^{i+} \bar{S}_M^i).$$

$$M = 1,2,3... \ , \ i = 0,1,2,..., 2M\text{-}1.$$

The above formulas show that two pairs C and S codes with L length generate four pairs C and S codes with 2L length, wherein represents taking one's complement, + represents increasing the sequence number.

The code word generated with this method has a good auto-correlation characteristic. When the C code and S code are completely separated, the auto-correlation fuction has no side lobe. For cross-correlation characteristic, for a C code and S code with a total length of 128 code word, there are 64 code words with (-1, 1) interference free window, 32 code words with (-3, 3) interference free window and 16 code words with (-7, 7) interference free window. Besides, there is another characteristic, in the 32 code words with (-3, 3) interference free window, there are two sets of code words with (-7, 7) interference free window. This means that a code block with certain interference free window can be further divided into multiple code blocks with a wider interference free window.

Taking TD - SCDMA system as an example, the invention is further described in the following.

In this embodiment, the physical layer structure of a TD - SCDMA system is burst structure or time-slot structure. The uplink and downlink use same frequency band through time division multiplex. With different spread spectrum code, in a same burst structure or a same time-slot structure, multiple subscribers data can be transited simultaneously. The uplink receiving and downlink transmitting use smart antenna technique to process the signal in spatial domain.

First, the original time-slot structure is kept unchanged. The 144 chips long midamble are updated, and a 128 chips LS code is used as the pilot symbol. The pilot structure is shown in Fig.1. Gaps, which are some protective chips without sending signal, can be set between the data field and pilot field of a time-slot. When other parts of the time-slot are kept unchanged, the total length of gaps is 16 chips. In Fig.1, three pilot positions are shown in (1), (2) and (3), respectively.

When the subscribers number is less than 16, a LS code with (-7, 7) interference free window can be used. In a code block, there are 16 code words with (-7, 7) interference free window. A (-7, 7) interference free window code can provide a maximum of 15 chips time delay for channel impulse response estimation. In general, according to the system setting, a channel time delay is less than 8 chips, so it is unnecessary to make any adjustment of pilot position.

If a channel time delay is greater than 8 chips, the pilot transmitting time of the subscriber can be accordingly shifted to guarantee that the channel estimation is made within the interference free window.

When the number of subscribers is greater than 16, the LS code with (-3, 3) interference free window can be used. There are 32 LS codes with (-3, 3) interference free window. In this case, it is possible to provide a 7 chips time delay for channel estimation. If a channel time delay is obviously greater than 4, then a step similar to step 3 is used.

If the TD - SCDMA system uses a smart antenna, the pilots of subscribers, whose signal arrival angle direction are fewer difference, are configured with the LS code sequence having wider interference free window. This will expand the time delay for channel estimation.

After the invention has used the LS code as pilot symbol, under 16 subscribers, the system performance is improved, and under 32 subscribers, the system performance is better than the original.

The invention uses the code block with a interference free window as the pilot symbol, or uses the code block with a interference free window to make pilot spread spectrum. In this way, interference in a system is reduced during channel estimation, so the channel estimation accuracy is improved. At the same time, the multiple access interference of a system is suppressed and affection of other noise is reduced too, so the system performance is improved. Again, through configuring system pilot symbol, the system can have more subscribers.

Within the spirit and principle of the invention, any update, equivalence replacement and improvement are all included in the scope of the invention Claims.

**Claims**

1. A method for improving the channel estimation accuracy of a wireless communication system with uplink synchronization and downlink synchronization, comprising:

   using a code block with a interference free window as pilot symbols, or
   using a code block with a interference free window to make spread spectrum for pilot symbols.

2. The method according to Claim 1, wherein code length of the code block with a interference free window is determined by following two factors:

   window width of the interference free window is greater than maximum channel transmission impulse response length; and codes number with a interference free window is greater than maximum subscribers number of the system.

3. The method according to Claim 1, further comprising:

   determining the width of the interference free window of code block according to subscribers number of the system.

4. The method according to Claims 1 to 3, wherein the code block with interference free window is a LS code.

| data1 | gap | c_code | gap | s_code | data2 |
|---|---|---|---|---|---|

(1)

| data1 | gap | c_code | gap | s_code | gap | data2 |
|---|---|---|---|---|---|---|

(2)

| c_code | gap | data | gap | s_code |
|---|---|---|---|---|

(3)

Fig. 1

EP 1 328 080 A1

<table>
<tr><td rowspan="2" style="text-align:center"><b>INTERNATIONAL SEARCH REPORT</b></td><td>International application No.</td></tr>
<tr><td>PCT/CN01/01184</td></tr>
</table>

**A. CLASSIFICATION OF SUBJECT MATTER**

IPC⁷: H04J13/00

According to International Patent Classification (IPC) or to both national classification and IPC

**B. FIELDS SEARCHED**

Minimum documentation searched (classification system followed by classification symbols)

IPC⁷: H04J13/00, H04J13/02

Documentation searched other than minimum documentation to the extent that such documents are included in the fields searched

Electronic data base consulted during the international search (name of data base and, where practicable, search terms used)

Channel,estimation,pilot,correlation, CDMA

**C. DOCUMENTS CONSIDERED TO BE RELEVANT**

| Category* | Citation of document, with indication, where appropriate, of the relevant passages | Relevant to claim No. |
|---|---|---|
| A | CN1256564A(MATSUSHITA ELECTRICT IND CO LTD)  14.Jun.2000 (14.06.99)<br>See entire document | 1-4 |
| A | US6097711A(Koichi Okawa; Koji Ohno; Mamoru Sawahashi; et at)01. Aug2000(01.08.00)<br>See entire document | 1-4 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim (S) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 8 Mar 2002(08.03.2002) | 0 4 APR 2002 (04.04.02) |
| Name and mailing address of the ISA/CN<br>6 Xitucheng Rd., Jimen Bridge, Haidian District,<br>100088 Beijing, China<br>Facsimile No. 86-10-62019451 | Authorized officer<br>QIN CHUN<br>Telephone No. 86-10-62093342 |

Form PCT/ISA /210 (second sheet) (July 1998)

6

| INTERNATIONAL SEARCH REPORT Information on patent family members | | International application No. PCT/CN01/01184 | |
|---|---|---|---|
| Patent document Cited in search report | Publication Date | Patent family Member(s) | Publication Date |
| CN1256564A | 14.06.00 | EP1001558A2 | 05.17.00 |
| | | JP2000151465A | 30.05.00 |
| | | CA2288486A1 | 11.05.00 |
| US5588020A | 01.08.00 | EP0810742A2 | 03.12.97 |
| | | JP10051354A | 20.02.97 |
| | | CA2206380A | 30.12.97 |
| | | KR98018118A | 05.06.98 |

Form PCT/ISA /210 (extra sheet6) (July 1998)

7